## Europäisches Patentamt
## European Patent Office
## Office européen des brevets

(19)

(11) Veröffentlichungsnummer: **0 208 122**
**B1**

(12)
# EUROPÄISCHE PATENTSCHRIFT

(45) Veröffentlichungstag der Patentschrift:
**30.03.88**

(51) Int. Cl.⁴: **F 16 C 32/06**

(21) Anmeldenummer: **86107351.8**

(22) Anmeldetag: **30.05.86**

(54) **Gasstatisches Lager in Doppelkegelform.**

(30) Priorität: **10.06.85 DE 3520717**
**10.04.86 DE 3612097**

(43) Veröffentlichungstag der Anmeldung:
**14.01.87 Patentblatt 87/3**

(45) Bekanntmachung des Hinweises auf die Patenterteilung:
**30.03.88 Patentblatt 88/13**

(84) Benannte Vertragsstaaten:
**AT BE CH DE FR GB IT LI LU NL SE**

(56) Entgegenhaltungen:
**CH - A - 465 761**
**DE - C - 868 811**
**GB - A - 1 262 852**
**GB - A - 2 003 559**
**US - A - 2 696 410**
**US - A - 3 657 782**
**US - A - 3 721 479**

(73) Patentinhaber: **INTERATOM Gesellschaft mit beschränkter Haftung, Friedrich-Ebert-Strasse, D-5060 Bergisch Gladbach 1 (DE)**

(72) Erfinder: **Tittizer, Gabriel, Dipl.-Ing., Auf dem Rosenberg 19b, D-5064 Rösrath-Hoffnungstal (DE)**
Erfinder: **Junghans, Ewald, Dipl.-Ing., Habichtweg 1, D-5060 Bergisch Gladbach (DE)**
Erfinder: **Bestenreiner, Georg, Dipl.-Ing., Rothenbacher Weg 16, D-5064 Rösrath 1 (DE)**
Erfinder: **Dahm, Christian, Pflasterhofweg 85, D-5000 Köln 50 (DE)**

(74) Vertreter: **Mehl, Ernst, Dipl.-Ing. et al, Postfach 22 01 76, D-8000 München 22 (DE)**

ACTORUM AG

## Beschreibung

Die vorliegende Erfindung betrifft ein gasstatisches Lager nach dem Oberbegriff des 1. Anspruchs. Gasstatische Lager (zumeist mit Luft betrieben, daher auch als aerostatische Lager bezeichnet) mit Lagerschalen aus Sintermetall oder einer porösen Keramik sind in der Form bekannt, dass Lagerschale und Welle jeweils eine hohlzylindrische bzw. zylindrische Form aufweisen. Bei gleichbleibender Breite des Lagerspaltes führt dies infolge der besseren Abströmmöglichkeit für das Gas an den Enden in der Lagerschale dazu, dass sich der höchste Gasdruck und damit auch die grösste Tragfähigkeit des Lagers in dessen mittlerem Bereich einstellt. Dieser Umstand begünstigt das Auftreten von Unstabilitäten, z.B. von Nutationsbewegungen; hierdurch können die Lagerflächen in Kontakt miteinander kommen und beschädigt werden. Zugleich als Radial- wie Axiallager ausgebildete gasstatische Lager mit porösen Lagerschalen sind z.B. aus der US-A-3 657 782 sowie aus den nicht vorveröffentlichten EP-A-208 122, 206 029 und 212 091 der Anmelderin bekannt. Hier liegt der axial wirkende Teil des Lagers in einer zur Wellenachse senkrechten Ebene; diese Orientierung genau einzuhalten, führt bei der praktischen Fertigung der Lagerschalen zu erhöhtem Aufwand. Ein hydrostatisches Lager in Doppelkegelform ist aus der GB-A-1 262 852 bekannt. Zwar weist dieses die Vorteile der sowohl radialals auch axialgerichteten Wirkung und der leichteren Einstellbarkeit auf, sein Schwingungsverhalten ist jedoch nicht besser als dasjenige der oben beschriebenen Lager, da das Lagerfluid nur an jeweils einer einzigen Stelle in die auf den Kegeloberflächen angelegten Taschen eintritt, so dass wie bei den zylindrischen Lagern der Druck axial aufgetragen, einen etwa sinusförmigen Verlauf nimmt mit der grössten Stützwirkung in der Mitte der Welle. Eine Übertragung dieser Konstruktion auf gasstatische Lager bewirkt wegen der Kompressibilität der dicken Gaspolster eher eine Verschlechterung des Schwingungsverhaltens. Problematisch sind bisher auch die Notlaufeigenschaften gasstatischer Lager. Bei einem Ausfall der Gasversorgung kann die Tragkraft des Lagers so schnell abnehmen, dass die Lagerflächen miteinander in Berührung kommen, ehe die Welle zum Stillstand gekommen ist. Bei Kleinturbinen, die zum Antrieb von Werkzeugen verwendet werden, ist bereits vorgeschlagen worden, in einem solchen Falle die dem Antrieb der Turbine dienende Gasströmung aus entgegengesetzter Richtung auf die Turbine wirken zu lassen, um diese schneller zum Stillstand zu bringen. Dies bedingt einen erhöhten Bedarf an Umschalteinrichtungen und ist dann unwirksam, wenn die Gasversorgung der Turbine zusammen mit derjenigen des Lagers ausfällt, da beide aus der selben Quelle versorgt werden.

Aufgabe der vorliegenden Erfindung ist ein gasstatisches Lager, das sowohl Radial- als auch Axialkräfte aufzunehmen imstande ist, weniger zu Schwingungen neigt und verbesserte Nortlaufeigenschaften aufweist.

Die Lösung dieser Aufgabe erfolgt durch die im kennzeichnenden Teil des 1. Anspruch angegebenen Mittel. Die vorgeschlagene Stundenglasform sorgt dafür, dass die Tragkraft des Lagers sowohl eine radiale als auch eine axiale Komponente aufweist. Dabei brauchen an die Fertigungsgenauigkeit nicht mehr ganz so hohe Anforderungen gestellt zu werden. Aus der US-A-3 171 295 ist eine Schraubenspindel mit darauf drehbarer, luftgeschmierter Mutter bekannt, die im Längsschnitt gesehen aus einer Vielzahl hintereinandergereihter doppelkegelförmiger Abschnitte zu bestehen scheint. Hier handelt es sich jedoch nicht um schnell umlaufende Teile, so dass deren Schwingungsverhalten unerheblich war. Da der Umfang des Lagerspaltes von der Mitte zu den Enden hin zunimmt, erhöht sich auch die je Längen- und Zeiteinheit durchtretende Gasmenge. Da in die Berechnung der Tragkraft jedoch nicht der Umfang der Welle, sondern nur deren Projektion eingeht, erhöht sich an den Enden der Lagerschale die Tragkraft. Die Welle wird daher anders als bei den bislang üblichen zylindrischen Lagern an den Enden stärker unterstützt als in der Mitte; hierdurch wird die Neigung der Welle zu Taumelbewegungen herabgesetzt.

Gemäss der im 2. Anspruch vorgeschlagenen Ausgestaltung der Erfindung behält die Welle an sich ihre fertigungstechnisch günstige zylindrische Form und es werden lediglich zwei kegelstumpfförmige, an die Konizität der Lagerschale angepasste Lagerkörper aus Kunststoff auf die Welle aufgezogen. Diese Kunststoffkörper sind leichter herzustellen als ein entsprechender Wellenabschnitt in der geforderten Form. Darüber hinaus weist die Paarung Metall/Kunststoff einen sehr viel günstigeren Reibungskoeffizienten auf als die Paarung Metall/Metall, wodurch die Notlaufeigenschaften des Lagers bedeutend verbessert werden.

In besondere Ausgestaltung der Erfindung wird vorgeschlagen, dass die Lagerkörper aus Hart-Polyvinylchlorid geformt sind, der wie sich im praktischen Versuch erwiesen hat, für diesen Zweck besonders geeignet ist.

In der DE-A-32 30 232 hat die Anmelderin eine Lagerschale aus Sintermetall vorgeschlagen, deren Lauffläche z. B. durch Rollieren verdichtet und zur erneuten Öffnung der durch das Rollieren zugeschmierten Poren anschliessend elektrokorrodiert wird. Gemäss dem im 3. Anspruch gemachten Vorschlag wird die Erhöhung der Tragkraft an den Enden der Lagerschalen durch ein axial unterschiedliches Behandeln der Lagerschale und die dadurch hervorgerufene unterschiedliche Porosität unterstützt, insbesondere wenn das Ausmass der Verdichtung nach der Mitte hin zunimmt, das Ausmass der Aufätzung jedoch nach der Mitte hin abnimmt, wie im 5. Anspruch vorgeschlagen.

Es sind schnelldrehende Werkzeugmaschinen, z. B. Fräser, Bohrer oder Schleifmaschinen bekannt, die durch auf die Welle aufgesetzte, mit Druckluft betriebene Kleinturbinen in Drehung versetzt werden. Eine Vereinfachung der Druckgasversorgung wird gemäss dem 6. Anspruch erreicht, wenn gasstatisches Lager und Turbine aus der selben Druckgasquelle gespeist werden.

Bei der im 7. Anspruch vorgeschlagenen Ausgestaltung dieses Gedankens dient das Rückschlagventil dazu, bei einer Unterbrechung der Gasversorgung (bei der nur selten mit einem schlagartigen Druckverlust gerechnet werden muss) zunächst die Zufuhr zur Turbine zu stoppen, während das noch vorhandene, landsam abnehmende Druckgefälle dazu benutzt wird, um das Lager bis zum erreichten Stillstand der Welle zu versorgen.

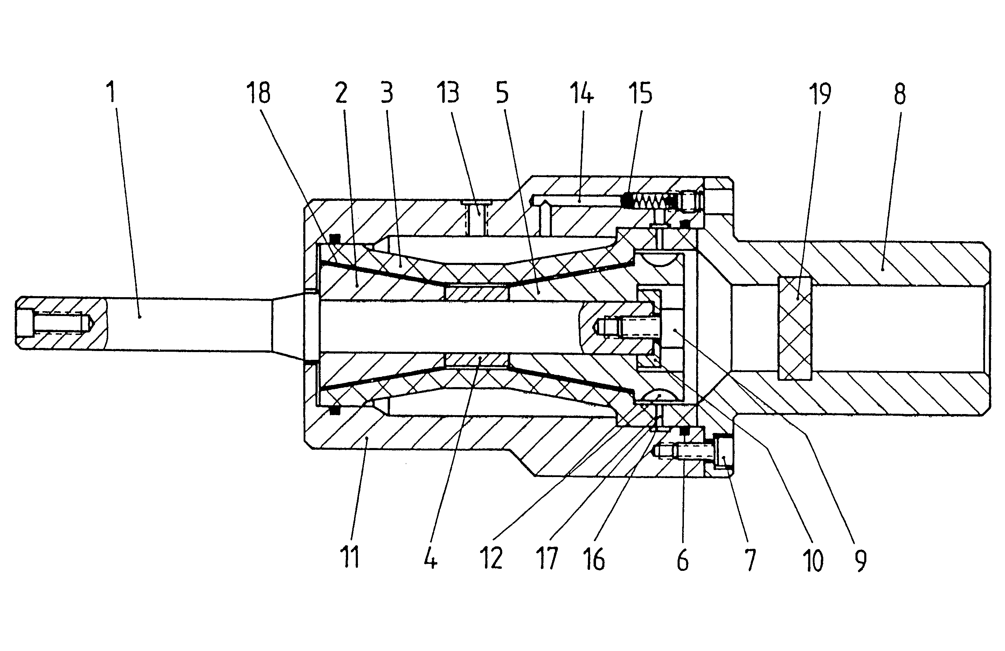

Ein Ausführungsbeispiel der Erfindung ist in der Zeichnung dargestellt, und zwar zeigt diese einen Längsaxialschnitt.

Mittels einer Welle 1 können hier nicht dargestellte, auf dieselbe geschobene Werkzeuge, z. B. ein Bohrer in Drehung versetzt werden. Gelagert ist die Welle 1 in einer aus Sintermetall hergestellten Lagerbuchse 3, deren laufffläche verdichtet und zur Porenöffnung anschliessend elektrokorrodiert sein kann. Zur Form der Lagerbuchse 3 passend sind auf die Welle 1 Lagerkörper 2, 4, 5 aus Kunststoff geschoben, die mittels einer Kappe 10 fixiert sind, die mit einer Schraube 9 befestigt ist. Die Lagerschale 3 ist in ein Gehäuse 11 eingepasst unter Abdichtung durch O-Ringe 6. Mit Schrauben 7 ist am Gehäuse 11 ein Ansatz 8 befestigt, der der Ableitung der Lager- und Antriebsluft dient und darüber hinaus zur Verbindung des Gerätes mit Handhabungseinrichtungen verwendet werden kann. Die einer hier nicht gezeigten Quelle entnommene Druckluft tritt über einen Anschluss 13 in das Gehäuse 11 ein, durchdringt die Lagerschale 3 (die in axiale Abschnitte von zu ihren Enden ansteigender Porösität unterteilt sein kann) und entweicht schliesslich über einen Lagerspalt 18. Von dem Anschluss 13 zweigt eine Leitung 14 ab, die in einer umlaufenden Nut 16 im Gehäuse 11 endet. Dieser Nut gegenüberliegend sind in der Lagerschale 3 radiale Bohrungen 17 angebracht, durch die die Druckluft die an den Lagerkörper 5 angeformten Turbinenschaufeln 12 beaufschlagen kann, wodurch die Welle 1 in Drehung versetzt wird. In die Leitung 14 ist ein Rückschlagventil 15 eingebaut, das bereits bei einer nicht allzu starken Absenkung des Luftdruckes schliesst. Die Luftzufuhr zur Turbine 12 wird dann unterbrochen und die verbleibende zur Verfügung stehende Druckluft wird nur noch zur Versorgung des Lagers gebraucht. Der Zeitpunkt des völligen Tragkraftverlustes kann so hinausgezögert werden, bis die Welle 1 zum Stillstand gekommen ist. Zur Dämpfung der Abströmgeräusche der Turbine 12 ist ein Schalldämpfer 19 vorhanden. Mit Lagern der hier gezeigten Art können Drehzahlen von etwa zweihunderttausend Umdrehungen in der Minute bei praktisch schwingungsfreiem Lauf erreicht werden.

## Patentansprüche

1. Gasstatisches Lager für eine mit hoher Drehzahl umlaufende Welle (1) mit poröser Lagerschale (3), dadurch gekennzeichnet, dass die Lagerschale (3) die Gestalt zweier abgestumpfter Hohlkegel aufweist, die an ihren kleinen Endflächen miteinander verbunden sind.

2. Gasstatisches Lager nach Anspruch 1, dadurch gekennzeichnet, dass komplementär zur Lagerschale (3) geformte Lagerkörper (2), (4), (5) aus Kunststoff auf die Welle (1) aufgesetzt sind.

3. Gasstatisches Lager nach Anspruch 2, dadurch gekennzeichnet, dass die Lagerkörper (2), (4), (5) aus Hart-Polyvinylchlorid geformt sind.

4. Gasstatisches Lager nach Anspruch 1 mit einer Lagerschale (3), deren Laufffläche verdichtet und ggf. anschliessend gezielt aufgeätzt ist, dadurch gekennzeichnet, dass das Ausmass der Verdichtung und/oder der Aufätzung axial unterschiedlich ist.

5. Gasstatisches Lager nach Anspruch 4, dadurch gekennzeichnet, dass das Ausmass der Verdichtung nach der Mitte hin zunimmt, bzw. das Ausmass der Aufätzung nach der Mitte hin abnimmt.

6. Gasstatisches Lager nach Anspruch 1 mit auf die Welle (1) aufgesetztem Turbinenrad (12), dadurch gekennzeichnet, dass eine sich verzweigende Leitung (13), (14) für die Zufuhr von Druckgas vorhanden ist, deren erster Zweig (13) der Versorgung der Lagerschale (3) und deren zweiter Zweig (14) der Versorgung der Turbine (12) dient.

7. Gasstatisches Lager nach Anspruch 6, dadurch gekennzeichnet, dass der zweite Zweig (14) mittels eines Rückschlagventils (15) absperrbar ist.

## Claims

1. Gas-static bearing for a shaft (1) rotating at a high rotational speed with a porous bearing shell (3), characterised in that the bearing shell (3) has the shape of two truncated hollow cones which, at their small end faces, are connected to one another.

2. Gas-static bearing according to claim 1, characterised in that bearing bodies (2), (4), (5) made of plastic and moulded to complement the bearing shell (3) are mounted on the shaft (1).

3. Gas-static bearing according to claim 2, characterised in that the bearing bodies (2), (4), (5) are moulded from hard polyvinyl chloride.

4. Gas-static bearing according to claim 1 with a bearing shell (3), the bearing surface of which is compressed and, if necessary, is then selectively corroded, characterised in that the extent of compression and/or corrosion varies axially.

5. Gas-static bearing according to claim 4, characterised in that the extent of the compression increases towards the centre, and the extent of the corrosion decreases towards the centre.

6. Gas-static bearing according to claim 1 with a turbine wheel (12) mounted on the shaft (1), characterised in that there is a line (13), (14), which branches, for the supply of compressed gas, the first branch (13) of which serves to supply the bearing shell (3) and the second branch (14) of which serves to supply the turbine (12).

7. Gas-static bearing according to claim 6, characterised in that the second branch (14) may be closed by means of a nonreturn valve (15).


## Revendications

1. Palier hydrostatique à gaz pour un arbre (1) tournant à grande vitesse, comprenant un coussinet (3) poreux, caractérisé en ce que le coussinet (3) affecte la forme de deux cônes creux tronqués qui sont reliés l'un à l'autre à leurs petites bases.

2. Palier selon la revendication 1, caractérisé en ce qu'il comprend des pièces (2, 4, 5) en matière synthétique, dont la forme est complémentaire à celle du coussinet (3) et qui sont disposées sur l'arbre (1).

3. Palier selon la revendication 2, caractérisé en ce que les pièces (2, 4, 5) sont en chlorure de polyvinyle dur.

4. Palier selon la revendication 1 avec un coussinet (3) dont la surface de portée est comprimée et éventuellement soumise ensuite à une attaque chimique contrôlée, pour l'ouverture des pores, caractérisé en ce que le degré de la compression et/ou de l'attaque chimique varie dans le sens axial.

5. Palier selon la revendication 4, caractérisé en ce que le degré de la compression augmente vers le milieu et/ou que le degré de l'attaque chimique diminue vers le milieu.

6. Palier selon la revendication 1 avec une roue de turbine (12) montée sur l'arbre (1), caractérisé en ce qu'il comprend une canalisation bifurquée (13, 14) pour l'amenée de gaz sous pression, dont la première branche (13) sert à l'alimentation du coussinet (3) et dont la seconde branche (14) sert à l'alimentation de la turbine (12).

7. Palier selon la revendication 6, caractérisé en ce que la seconde branche (14) peut être coupée par une soupape anti-retour (15).

1   18   2   3   13   5   14   15   19   8

11   4   12   17   16   6   7   10   9

0 208 122